# EUROPEAN PATENT APPLICATION

(11) **EP 2 599 605 A1**
(43) Date of publication of application: **05.06.2013**
(21) Application number: 12194364.1
(22) Date of filing: 27.11.2012
(51) Int. Cl.: B29B 15/12, B29D 30/48, B29D 30/38, D06M 10/00, B60C 9/00, D07B 1/06

(54) **Texturing of a reinforcing cord for a pneumatic tire**

(30) Priority: 29.11.2011 US 201113305825
(71) Applicant: The Goodyear Tire & Rubber Company, Akron, OH 44316-0001 (US)
(72) Inventor: Mzabi, Samy, L-9048 Ettelbruck (LU); Boes, Claude Ernest Felix, L-9147 Erpeldange (LU); Bertemes, Gilles, L-7511 Rollingen (LU); Besnoin, Etienne, L-1539 Luxembourg (LU); Willems, Patrick, L-7570 Mersch (LU)
(74) Representative: Kutsch, Bernd

(57) **Abstract**

A method for forming an adhesion joint between a cord and a rubber matrix is disclosed. The method comprises the steps of providing a cord having an initial surface; texturing the initial surface such that the resulting surface is rougher than the initial surface; and inserting the cord into a rubber matrix. Also, a pneumatic tire or another article of manufacture comprising a reinforcing structure reinforced with a cord is disclosed. The cord has a surface modified for increasing adherence of the cord to a rubber matrix.

## Description

### Field of the Invention

The present invention is directed to a pneumatic tire with textured cord reinforcement and a method for producing such a cord. Specifically, the cord may comprise inorganic, organic, and/or metal material.

### Background of the Invention

It is frequently desirable to reinforce rubber articles (such as, tires, conveyor belts, power transmission belts, timing belts, hoses, etc.) by incorporating reinforcing elements. Pneumatic vehicle tires are often reinforced with reinforcing elements. Such tire elements may be composed of high carbon steel, high carbon steel coated with a thin layer of brass, nylon, polyester, carbon, glass, polyamide, etc. Such a tire element may be a monofilament, but may also be prepared from several filaments that are stranded together to produce a cord. The strands of filaments may also be cabled to form the cord. It is beneficial for the reinforcing elements in tires to exhibit high strength and ductility, as well as high fatigue resistance.

Transformation of a metal alloy into a filament suitable for reinforcing a tire may involve multiple processing stages, including rough drawing, patenting, brass plating, and fine drawing of a metal rod. Such a transformation may include many variations of processing stages, such as repetition of different stages.

Drawing of the metal rod may reduce the original diameter to a smaller diameter by passing the wire through a conical die. Drawing of the metal rod may increase the strength characteristics of the reduced diameter rod. Cold drawing may be conducted by using either wet or dry lubricants. Formation of a filament with desirable properties may include multiple drawing steps both prior to, and after, patenting of the filament.

Patenting may obtain a structure which combines high tensile strength with high ductility, and thus impart to the filament the ability to withstand a large reduction in area to produce the desired finished sizes possessing a combination of high tensile strength and increased toughness. Patenting may be a continuous process and consist of first heating the metal alloy to a temperature within the range of 900° C to 1150° C to form austenite. Then, the austenite may cool at a rapid rate to a lower temperature at which transformation occurs thereby changing the crystal structure of ferrite from face centered cubic into pearlite, an eutectoid mixture of ferrite and cementite, which may yield the desired mechanical properties of the filament. While it may be desired to form a fully pearlitic structure, additional phases may be present, such as undissolved carbides, pro-eutectoid cementite, or bainite.

For steel tire reinforcing elements, the goal may be an increase in strength of the filament without a loss in ductility and fatigue resistance. The resulting filament may be characterized as high tensile, super tensile, ultra tensile, and mega tensile wherein each strength is defined by a minimum tensile strength.

### Summary of the Invention

The invention relates to a method in accordance with claim 1 and to a tire or an article of manufacture in accordance with claims 7 and 14 respectively.

Dependent claims refer to preferred embodiments of the invention.

The present invention discloses in one aspect a method for forming an adhesion joint between a cord and a rubber matrix. The method preferably comprises the steps of: providing a cord having an initial relatively smooth surface; texturing the smooth surface such that the resulting surface is rougher than the initial surface of the cord; and inserting the cord into a rubber matrix such that the resulting surface provides enhanced adhesion to the rubber matrix compared to the adhesion of the initial surface to the rubber matrix.

According to another preferred aspect of the present invention, the texturing step is performed by a laser.

According to still another preferred aspect of the present invention, the cord is placed in a carcass ply of a pneumatic tire.

According to yet another preferred aspect of the present invention, the cord is placed in a belt ply of a pneumatic tire.

According to still another preferred aspect of the present invention, the cord is placed in a flipper of a pneumatic tire.

According to yet another preferred aspect of the present invention, the cord is placed in a runflat insert of a pneumatic tire.

According to still another preferred aspect of the present invention, the cord is placed in a chipper of a pneumatic tire.

According to yet another preferred aspect of the present invention, the cord is placed in an overlay of a pneumatic tire.

According to still another preferred aspect of the present invention, the cord is placed in an apex of a pneumatic tire.

According to yet another preferred aspect of the present invention, the cord is placed in a gum strip of a pneumatic tire.

The present invention further discloses a pneumatic tire comprising a carcass, a tread, a belt reinforcing structure, and an apex. The carcass comprises a reinforcing ply structure extending between a pair of bead portions and a pair of sidewalls. Each sidewall is located radially outward of one of the pair of bead portions. The belt reinforcing structure is located radially outward of the carcass and radially inward of the tread. The apex is located in each sidewall. The pneumatic tire has a reinforcing structure reinforced with a cord. The cord has a surface modified for adhering to a rubber matrix.

According to another preferred aspect of the present invention, the surface is micro-textured by a laser.

According to still another preferred aspect of the present invention, the reinforcing structure is the carcass.

According to yet another preferred aspect of the present invention, the reinforcing structure is the carcass reinforcing ply.

According to still another preferred aspect of the present invention, the reinforcing structure is the belt reinforcing structure.

According to yet another preferred aspect of the present invention, the reinforcing structure is the apex.

According to still another preferred aspect of the present invention, the cord is constructed of steel.

According to yet another preferred aspect of the present invention, the cord comprises steel filaments micro-textured by a laser prior to being placed in the cord.

According to still another preferred aspect of the present invention, the cord comprises steel filaments placed in the cord prior to the cord being micro-textured by a laser.

According to yet another preferred aspect of the present invention, the reinforcing structure is located adjacent one of the bead portions.

### Definitions

The following definitions are applicable for the present invention.

"Apex" means an elastomeric filler located radially above the bead core and between the plies and the turnup ply.

"Carcass" means the tire structure apart from the belt structure, tread, undertread, and sidewall rubber over the plies, but including the beads.

"Chipper" refers to a narrow band of fabric or steel cords located in the bead area whose function is to reinforce the bead area and stabilize the radially inwardmost part of the sidewall.

"Flipper" refers to a reinforcing fabric around the bead wire for strength and to tie the bead wire in the tire body.

"Ply" means a cord-reinforced layer of rubber-coated radially deployed or otherwise parallel cords.

"Self-supporting run-flat" means a type of tire that has a structure wherein the tire structure alone is sufficiently strong to support the vehicle load when the tire is operated in the uninflated condition for limited periods of time and limited speed. The sidewall and internal surfaces of the tire may not collapse or buckle onto themselves due to the tire structure alone (e.g., no internal structures).

"Sidewall insert" means elastomer or cord reinforcements located in the sidewall region of a tire. The insert may be an addition to the carcass reinforcing ply and outer sidewall rubber that forms the outer surface of the tire.

### Brief Description of the Drawings

The present invention will be described by way of example and with reference to the accompanying drawing, in which:

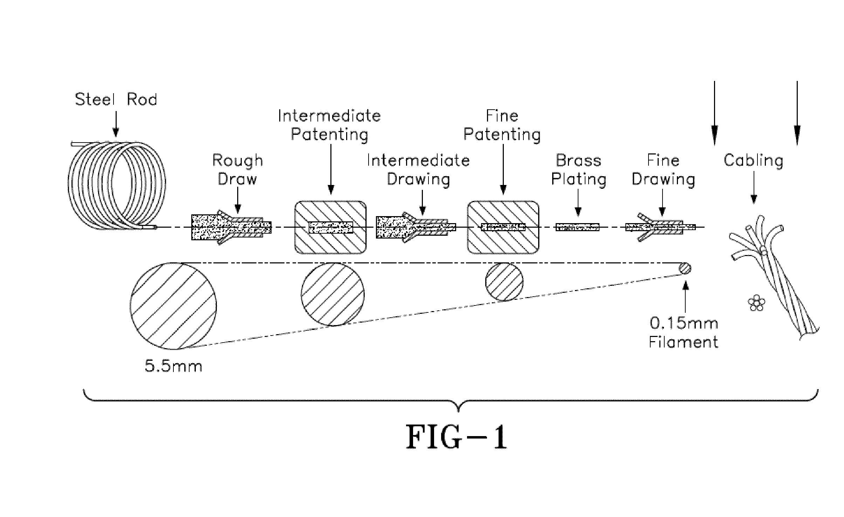

FIG. 1 represents a schematic flowchart of an example process in accordance with the present invention.

### Detailed Description of an Example of the Present Invention

In accordance with the present invention, a laser may form a micro-texture at the surface of tire reinforcing cords, such as cords of steel, inorganic material, organic material, or aramid. The micro-texture may roughen the smooth surface thereby improving adhesion between the cords and the rubber matrix of the tire, thereby improving the durability and fatigue performance of the tire. The micro-texture may be varied by adjusting the wavelength, focus (or accuracy), continuity of power, and/or angle of incidence of the laser. The power may have a power/accuracy comparable to conventional medical lasers. Instead of using a laser, also plasma etching, or an etching bath may be used.

An example method for achieving a micro-textured surface on a metal wire is shown in FIG. 1. The initial rod may be steel, as described below. Carbon, C, the main strengthening element, may be present in the amount of 0.95 to 1.3%. A steel with carbon content of 0.95 to 1.05% may be processed to have a fine pearlitic structure characterized by a good combination of high ductility and strength. When the carbon content is greater than 1.05%, formation of cementite networks around blocks of pearlite colonies may occur. The increased carbon may result in a higher volume fraction of cementite leading to increased strength of the steel, but may dramatically reduce local ductility of the wire because broken cementite networks may cause crack formation.

However, the characteristics of the steel may be controlled by a defined chemical composition and processing to provide a high strength wire with ductility sufficient for wire drawing without premature cracks. A steel wire may be processed to have ductile properties similar to a 0.96% C steel with improved strength. Chromium, Cr, may be present in amounts of 0.2 to 1.8%. Cr reduces a carbon diffusion rate resulting in both refining of the pearlite and reducing the thickness of the pro-eutectoid cementite network during patenting. The Cr may partition into cementite, affecting the cementite crystal structure and thereby reducing the cementite brittleness. If the amount of Cr is less than 0.2%, the addition may induce a poor effect. Conversely, if the amount of Cr is greater than 1.8%, hardenability becomes high and martensite or bainite may be formed during patenting, resulting in deterioration of cold workability.

Manganese, Mn, may be present in amounts of 0.2 to 0.8%. Mn is a strong solid solution strengthener of ferrite. When the Mn content is less than 0.2%, the strengthening effect may not be achieved, and when the Mn content is in excess of 0.8%, there may be a deterioration of cold workability, particularly due to a higher number of Mn-S inclusions.

Silicon, Si, may be present in amounts of 0.2 to 1.2%. Si imparts a strong solid solution strengthening on ferrite. When the Si content is less than 0.2%, the effect may be lost, and when the Si content is greater than 1.2%, the silicate inclusions may form thereby increasing the probability of wire breakage during drawing.

Cobalt, Co, if present, may be not more than 2.2%. Co suppresses the formation of cementite networks in the steel when the carbon content is greater than 1.0%. If the amount of Co is greater than 2.2%, cobalt inclusions may form, negatively affecting wire drawability. Co also produces additional cost.

Niobium, Nb, if present, may be not more than 0.1 % when carbon content is greater than 1.0%. The small amount of Nb may control the size of pearlite colonies by limiting growth of austenite grains at the austenitization stage of patenting and may prevent formation of large particles that may result in wire breaks during drawing. Small Nb may precipitate at austenite grain boundaries preventing excessive austenite grain growth, thereby improving wire ductility.

Boron, B, may be present in amounts of 0.006 - 0.0025 parts per million (ppm). The small amount of B may affect the structure of crystalline interfaces.

During wire drawing, the volume fraction of ferrite/cementite interlamellar interfaces may increase up to ten percent. Boron atoms may aggregate at grain boundaries, thereby eliminating de-cohesion. Additionally, boron may tie free nitrogen, thereby reducing strain aging during drawing and improving ductility.

### Exemplary Compositions for the Steel in Table 1.

**Table 1: Steel Wire Compositions**

| | Compariso n | A | B | C |
|---|---|---|---|---|
| C, % | 0.80 | 0.96 | 1.04 | 1.10 |
| Cr, % | 0.04 | 0.20 | 0.5 | 0.5 |
| Mn, % | 0.6 | 0.6 | 0.6 | 0.6 |
| Si, % | 0.4 | 0.4 | 0.4 | 0.4 |
| Co, % | - | | 1.8 | 1.9 |
| Nb, % | - | | 0.006 | 0.006 |
| B, ppm | - | .0016 | 0.0006 | 0.0006 |

After the desired steel composition is determined, the steel may be hot rolled into wires with an initial diameter of about 4.0 mm to about 5.5 mm. The wire may be directly drawn for an initial diameter reduction, patented to the tensile strength desired, brass plated, and finely drawn to reduce the wire to a final diameter of about 0.1 to 0.35 mm.

The hot rolled steel may be free of centerline carbon segregation with non-deformable inclusions having a size not more than 10 microns. The network of pro-eutectoid cementite, if present, may have a thickness of not more than 20 nm.

Each of the steps in FIG. 1 is described below. After the steel is hot rolled to an initial rod diameter of about 4.0 to about 5.5 mm, the rod may be subjected to a rough/direct draw. During the rough/direct draw, by using a dry drawing lubricant at a drawing rate up to 14 m/sec, the rod diameter may be reduced to a wire with a diameter between about 1.1 mm to about 2.0 mm.

Following the rough/direct draw, the wire may be subject to intermediate patenting, which may include heat treating the wire to remove the effects of the rough/direct draw. Following the intermediate patenting, the wire may be subject to an intermediate draw/pass wherein the diameter of the wire is reduced to between about 0.15 mm to about 0.2 mm. Following the intermediate draw/pass, the wire may be subject to a fine patenting, which may include heat treating the wire to remove the effects of the intermediate draw. Following the fine patenting, the wire may be plated with brass to improve adhesion to the rubber matrix. Following the brass plating, the wire may be subject to a fine draw/pass wherein the diameter of the wire may be reduced by approximately 4.0% to about 0.15 mm. Following the fine draw/pass, in accordance with the present invention, a laser may form a micro-texture at the surface of the wire for improving adhesion between the wire and the rubber matrix of a tire, thereby improving the durability and fatigue performance of the tire (left arrow in FIG. 1). The wire may then be combined with other micro-textured wires to form a cable that may be used for reinforcing part of a tire. Alternatively the wire may be cabled following the fine draw/pass and the resulting cable may be micro-textured by a laser (right arrow in FIG. 1).

During an example patenting process, the ductility of the wire may be improved and the wire may have a microstructure capable of yielding the target strength required of the wire. The example patenting process may have three distinct steps: austenitization, cooling, and transformation. During austenitization, the wire may be quickly heated to an initial high temperature within the range of 930° to 1100° C. The furnace temperature in the first furnace section may be 50° C to 100° C higher than the targeted austenitization temperature such that the wire may be heated faster to the desirable temperature. After the wire is heated to the initial high temperature, the wire may pass into at least one lower temperature furnace section to maintain a desired wire temperature. Temperature in the remaining furnace zones may gradually taper down to the target austenitization temperature in the last zone.

The wire may be given sufficient time for the alloy to be fully austenitized as it passes through the different heating sections; however, the wire may not be subjected to an excessive heating period. The goal in this example step may be a small austenite grain size (e.g., 50 microns or less). The temperature gradient experienced by the wire may result in a formation of a fine grained austenite microstructure yielding improved ductility characteristics of the patented wire. Heating of the wire may be accomplished by electric resistance, fluidized bed, or an electric or gas fired furnace. The duration in each furnace may depend on furnace length and wire speed.

After passing through the heated zones, as described above, the wire may be rapidly cooled to a temperature below the ideal transformation temperature. Typical transformation temperatures may range from 525° C to 620° C, depending on the amount of the alloying elements. The wire may be cooled to a temperature of 20° C to 80° C below the ideal temperature. This lower temperature may become the transformation temperature of the wire being worked.

The wire may be cooled at a rate higher than 30° C per second, or even 50° C per second. The wire may be cooled to the desired temperature within a period of 4 seconds or less. By quickly quenching the wire to a lower temperature, formation of a thick network of pro-eutectoid cementite may be suppressed thereby improving ductility of the wire.

After the wire is rapidly cooled to a transformation temperature, similar to the austenitization phase, the wire may pass through multiple, different temperature heat zones. The temperature in the first zone may be set to maintain the wire temperature at the transformation temperature. The second temperature zone may be 10° C to 20°C less than the prior zone to compensate for heat generated by the wire as transformation from the austenite phase to the pearlite phase progresses and to thereby prevent the wire from overheating. The time in the second zone may be approximately half of the total duration for the wire to transform; total time may be dependent upon the length of time for the wire to achieve full transformation and the exact wire composition.

By employing a temperature gradient at this transformation step, the release of latent heat may result in fine pearlitic microstructure with an interlamellar spacing of less than 60 nm, thereby improving strength characteristics of the wire. After the transformation is fully completed, the wire may be cooled to ambient temperature.

During an example fine drawing process, a tapered draft or a mixed tapered-even area reduction draft may be employed. The wire may be drawn through a die with an 8° approach angle. Again, similar to the direct draw, the wire may be subject to a skin pass wherein the diameter of the wire is reduced by 4% for the purpose of reducing delamination.

By using the above die design and process and applying true strains of greater than 3.8, and preferably 3.9 to 4.5 as defined by εd = 2ln(dₒ/d) where dₒ is the starting wire diameter and d is the final diameter filament of tensile strength greater than 3800 MPa at wire diameters 0.35 mm are achieved and wires with a tensile strengths greater than 4500 MPa at 0.20 mm are possible. For example, the true strain in the drawing of 1.65 mm wire to 0.20 mm diameter filament is 4.2.

As stated above, prior to a fine draw, the wire may be treated for corrosion resistance and to improve wire drawability and the adhesion characteristics of the wire. For example, the wire may be coated with a thin layer of brass or brass alloys to improve adhesion of the steel wire to an elastomer, such as the rubber matrix of a tire. The coating of brass/brass alloy may be sufficient to remain on the wire throughout the fine drawing.

Joining of metals by adhesion is a conventional alternative to welding and mechanical fastening because adhesion joints may eliminate local stress concentrations and thermal distortion, and reduce weight by eliminating rivets, screws, and/or other fasteners. However, the durability of an adhesion joint may largely depend on the joint design, type of adhesive, and the surface structure of the adherent. Metallic medical implants may be used for internal fixation of body parts, such as bones. Some of these implants may be removed after a fractured bone is healed. Other implants, such as dental implants and joint replacements, may remain in the body indefinitely. As a result, strong and rapid fixation between a metallic implant and bone tissue has been of prime importance to surgeons. Different surface texturing techniques have thus been conventionally utilized. Some conventional fixation methods may be: (1) to use bone cement or ceramic coating for direct chemical bonding; (2) to use a screw thread for mechanical locking; and (3) to make use of the surface texture on the implant to facilitate the attachment of bone cells, and subsequently bone tissue growth on the implant.

The advantages for laser micro-drilling of medical implants, compared with other technologies, may produce highly precise machining and complex geometries. The more holes drilled on the adherent surface, the more mechanical locking sites may result. Similarly, the more holes on the medical implant surface, the easier bone cells may attach, resulting in higher adhesion strength. Thus, the adhesion strength of metal surfaces subject to different surface texturing treatment may be increased by micro-texturing, such as by laser, sand-blasting, electro-erosion, or acid treatment. In accordance with the present invention, this principle also applies to metal surfaces adhering to a rubber matrix, as stated above.

A cord having a laser micro-textured surface may improve adhesion to a rubber matrix, such as wires used in a carcass ply, belt ply, overlay, apex, flipper, chipper, runflat insert, gum strip, etc. in accordance with the present invention. Such improved adhesion may thereby improve any or all functional properties of a pneumatic tire. This adhesion thus enhances the performance of the pneumatic tire, even though the complexities of the structure and behavior of the pneumatic tire are such that no complete and satisfactory theory has been propounded.

## Claims

1. A method for forming an adhesion joint between a cord and a rubber matrix, the method comprising the steps of:
providing a cord having an initial surface;
texturing the initial surface such that the resulting surface is rougher than the initial surface; and
inserting the cord into a rubber matrix.

2. The method of claim 1 wherein the resulting surface provides enhanced adhesion of the cord to the rubber matrix compared to the adhesion of the cord having the initial surface to the rubber matrix.

3. The method of claim 1 or 2 wherein the initial surface is smooth or relatively smooth.

4. The method of at least one of the previous claims wherein the texturing step is performed by a laser.

5. The method of at least one of the previous claims wherein the texturing step is performed by an etching bath, sand blasting, electro-erosion or by plasma etching.

6. The method of at least one of the previous claims further comprising the step of placing the cord in a carcass ply, an apex, a gum strip, a flipper, a chipper, an overlay, a sidewall insert or in a belt ply of a pneumatic tire.

7. A pneumatic tire comprising a reinforcing structure reinforced with a cord, the cord having a surface modified for increasing adherence of the cord to a rubber matrix.

8. The tire of claim 7 wherein the surface is micro-textured.

9. The tire of claim 7 or 8 wherein the reinforcing structure is the carcass or a carcass reinforcing structure, a belt reinforcing structure, an apex, or wherein the reinforcing structure is located adjacent at least one bead portion of the tire.

10. The tire of at least one of the previous claims 7 to 9 wherein the cord is constructed of steel.

11. The tire of at least one of the previous claims 7 to 10 wherein the cord comprises micro-textured steel filaments.

12. The tire of claim 11 wherein the steel filaments are micro-textured by a laser, by plasma etching, sand blasting, electro-erosion or by etching in a bath prior to being placed in the cord.

13. The tire of at least one of the previous claims 7 to 12 comprising a carcass comprising a reinforcing ply structure extending between a pair of bead portions, a pair of sidewalls, each sidewall located radially outward of one of the pair of bead portions, a tread, a belt reinforcing structure located radially outward of the carcass and radially inward of the tread, and an apex located in each sidewall,

14. An article of manufacture comprising a reinforcing structure reinforced with a cord, the cord having a surface modified for increasing adherence of the cord to a rubber matrix.

15. The article of manufacture of claim 14 wherein the article is a conveyor belt, a transmission belt, a timing belt or a hose.
